Europäisches Patentamt

(19) European Patent Office

Office européen des brevets

(11) Publication number: **0 066 445**
**B1**

(12) **EUROPEAN PATENT SPECIFICATION**

(45) Date of publication of patent specification: **21.11.85**

(21) Application number: **82302679.4**

(22) Date of filing: **25.05.82**

(51) Int. Cl.⁴: **G 11 B 19/24**

(54) **Servo circuit for use in reproducing PCM signal discs.**

(30) Priority: **29.05.81 JP 83028/81**

(43) Date of publication of application:
**08.12.82 Bulletin 82/49**

(45) Publication of the grant of the patent:
**21.11.85 Bulletin 85/47**

(84) Designated Contracting States:
**AT DE FR GB IT NL SE**

(56) References cited:
**EP-A-0 007 200**
**GB-A-2 062 905**
**GB-A-2 085 199**

**PATENTS ABSTRACTS OF JAPAN, vol. 3, no.**
**31, (E-98), March 16, 1979, page 86E98**

(73) Proprietor: **SONY CORPORATION**
**7-35 Kitashinagawa 6-Chome Shinagawa-ku**
**Tokyo 141 (JP)**

(72) Inventor: **Yoshida, Tadao**
**72-1-716 Takaishi Tama-ku**
**Kawasaki-shi Kanagawa-ken (JP)**

(74) Representative: **Thomas, Christopher Hugo**
**et al**
**D Young & Co 10 Staple Inn**
**London WC1V 7RD (GB)**

Courier Press, Leamington Spa, England.

## Description

This invention relates to a servo circuit for use in an apparatus for reproducing PCM (pulse code modulated) information signals, such as audio signals, recorded on a disc. Digital audio discs of optical and electrostatic capacitive type are known.

Two methods have been proposed for recording PCM audio signals on a disc. In one system the information is recorded on the disc while it is rotated at a constant angular velocity, and in the other system the information is recorded on the disc while it is rotated at a constant linear velocity. So as to increase the recording density it is preferable to record the PCM audio signals on the disc at a constant linear velocity. In this case, the disc on which the PCM audio is recorded at a constant linear velocity must be played back with the disc rotated at a constant linear velocity.

In one previously proposed circuit for controlling a disc so as to rotate it at a constant linear velocity during playback, the position of a pick-up device is detected with a potentiometer and the detected output is supplied to a divider so as to provide control information. This method requires the provision of the position detector and the divider, and the circuit is rather complicated and expensive.

To overcome this problem another circuit has been proposed wherein the detector for detecting the position of the pick-up is eliminated and a play-back signal from the disc is utilized to control the disc to rotate it at a constant linear velocity.

In examples of such apparatus, the PCM audio signal is recorded using a base band and a carrier modulation system such as an amplitude modulation or a frequency modulation system, and a modulation method using a run length limited code is usually employed. Such a run length limited code modulation is used to increase the recording efficiency by extending or prolonging the minimum transition interval $T_{min}$ between the transition of two data bits representative of "0" and "1", which is the minimum interval between signal inversions, and the system achieves a self-clocking on playback by shortening the maximum transition interval $T_{max}$ which is the maximum interval between signal inversions.

In such apparatus, the deviation of the maximum transition interval $T_{max}$ or the minimum transitional interval $T_{min}$ from a reference value when a linear velocity is utilized as a reference is detected and used as information to derive the velocity servo.

By utilizing the fact that a modulation output where the maximum transition interval $T_{max}$ occurs successively is not generated by normal modulation, a bit pattern in which such maximum transitional interval $T_{max}$ occurs twice successively is employed as a frame synchronizing signal. Thus, utilizing this frame synchronizing signal which always appears in each frame, allows the rotation of the disc or motor to be controlled such that the maximum transition interval $T_{max}$ equals the reference value.

As an example, the maximum transitional interval $T_{max}$ can be selected as 5.5 T where T represents a bit cell period of the input data.

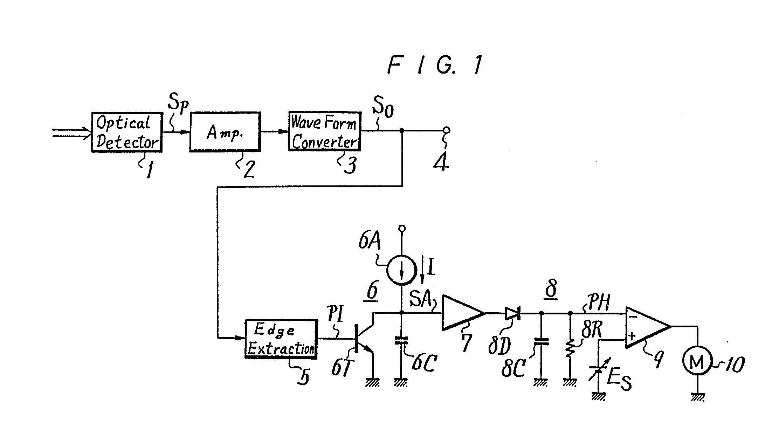

Figure 1 of the accompanying drawings schematically illustrates an example of a previously proposed reproducing apparatus for reproducing a disc using an optical signal detection system.

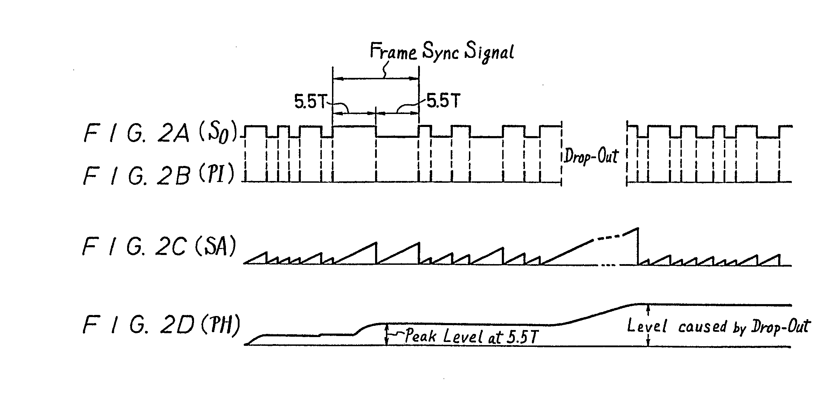

In the apparatus of Figure 1, a photo-detector 1 reproduces a playback PCM signal $S_p$ which has a waveform which is distorted to the extent of being almost a sine wave shape. The signal $S_p$ is supplied to an amplifier 2 and then to a waveform converting circuit 3 which derives an output signal $S_0$ illustrated in Figure 2A and which reproduces the "1" and "0" of the recorded signal. This output signal $S_0$ is supplied to an output terminal 4. The output signal $S_0$ is also supplied to an edge extracting circuit 5 which comprises a differentiating circuit and which produces a signal PI illustrated in Figure 2B and which indicates the rising and falling edges of the output signal $S_0$.

The signal PI is supplied to the base of a transistor 6T which serves to reset an integrating circuit 6. The integrating circuit 6 is supplied with a current I which flows from a constant current supply source 6A to a capacitor 6C to charge the capacitor 6C, so that the voltage across the capacitor 6C is raised to a high value at a constant charging rate. When a pulse of the signal PI is applied to the transistor 6T, the transistor 6T will be turned on by the pulse, and this will cause the voltage on the capacitor 6C to be instantly discharged through the transistor 6T. Thus, the integrating circuit 6 produces a sawtooth-wave voltage SA illustrated in Figure 2C which has peaks equal to the level corresponding to the length of the transition interval of the output signal $S_0$.

The sawtooth-wave voltage SA is supplied through a buffer amplifier 7 to a peak value hold circuit 8. The output voltage of the buffer amplifier 7 is supplied through a diode 8D to a capacitor 8C to charge the capacitor 8C, which is discharged with a time constant determined by a resistor 8R and the capacitor 8C. The discharge time constant is selected to be several to ten times the repeating period of the data frame of the playback signal, so that the peak value of the sawtooth-wave voltage SA will be held by the capacitor 8C.

Since the frame synchronizing signal appears once for every one period of the data frame, the output signal PH illustrated in Figure 2D obtained from the peak value hold circuit 8 maintains a level corresponding to the length of the maximum transition interval $T_{max}$ within the playback signal. Thus, if the level of the signal supplied by the peak value hold circuit 8 when the maximum transition interval $T_{max}$ is exactly the correct transition interval 5.5 T is taken as a velocity reference voltage $E_S$, and the difference

in level between the velocity reference voltage $E_S$ and the output signal PH of the peak value hold circuit 8 is detected, it will indicate the amount of the deviation of the rotational velocity of the disc from that used to give the linear velocity when recording.

For this reason, the output signal PH of the peak value hold circuit 8 is supplied to a comparator 9 in which the difference relative to the velocity reference voltage $E_S$ is detected. A spindle motor 10 for rotating the disc is controlled by the output signal from the comparator 9, so that the disc will be rotated at a constant linear velocity in dependence on the playback signal.

However, with this apparatus, if there is a scratch on, or there is dust adhering to the disc, there will be a drop-out in the playback signal. Also, if a track is jumped during playback, the signals illustrated in Figures 2A to 2D will not be obtained and, thus, the pulses of the signal PI will not exist at the output of the edge extracting circuit 5 for this period. However, the capacitor 6C in the integrating circuit 6 will continue to be charged and the output voltage PH of the peak value hold circuit 8 will gradually increase, which will cause the spindle motor 10 to be driven at the wrong speed.

According to the present invention there is provided a servo circuit for use with an apparatus for reproducing a disc driven by a disc drive motor and on which a pulse code modulated signal modulated by a run length limited code is recorded at a constant linear velocity, the servo circuit comprising:

a detecting circuit for detecting the time during which a playback signal is inverted and producing an output corresponding to the detected time; and

a peak value hold circuit for receiving and holding the peak value of the output from said detecting circuit for supply to a comparator; characterised by:

a bottom value hold circuit downstream of said peak value hold circuit having a time constant longer than the time constant of said peak value hold circuit and for producing an output which follows the output of said peak value hold circut; and

said comparator receiving an output of said bottom value hold circuit and a reference voltage and producing a signal to control said disc drive motor such that a maximum or minimum time during which said playback signal is inverted is maintained at a value corresponding to the reference value of the linear velocity, whereby the linear velocity of said disc upon playback becomes equal to said reference value.

The invention will now be described by way of example with reference to the accompanying drawings, in which:

Figure 1 is a schematic block diagram illustrating an example of a previously proposed servo circuit for use in apparatus for reproducing PCM audio discs;

Figures 2A to 2D are waveform diagrams; and

Figure 3 is a schematic block diagram illustrating an embodiment of the invention and comprising a servo circuit for use in apparatus for reproducing PCM audio discs.

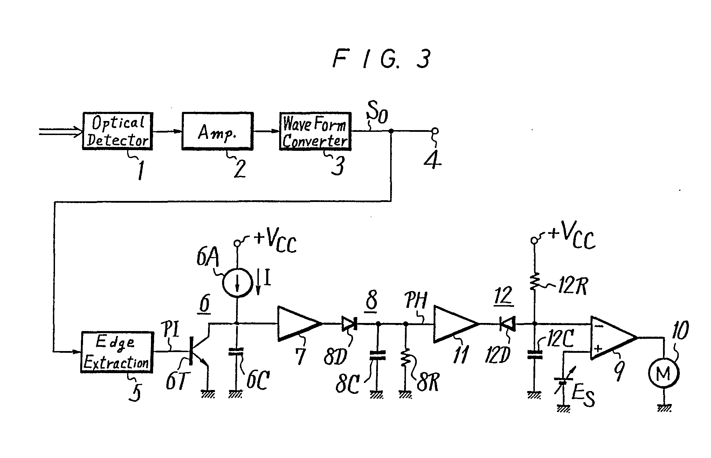

In the embodiment of Figure 3, parts similar to those in the apparatus of Figure 1 are marked with the same references and will not be further described in detail. Additionally, in the embodiment a bottom value hold circuit 12 is inserted prior to the comparator 9, between it and the resistor 8R, the capacitor 8C and the diode 8D of the peak value hold circuit 8 of Figure 1.

In the embodiment of Figure 3, the photo detector 1, the amplifier 2, the waveform converting circuit 3, the edge extracting circuit 5, the integrating circuit 6, the buffer amplifier 7, the diode 8D, the capacitor 8C, and the resistor 8R are the same as in the circuit of Figure 1. In the embodiment, a buffer amplifier 11 is connected to receive the output across the resistor 8R and supplies an input to a diode 12D which is poled in the opposite direction to the diode 8D. A positive reference voltage $+V_{cc}$ is supplied through a resistor 12R to a capacitor 12C which has its other side grounded. The velocity reference voltage $E_S$ is supplied to the comparator 9, and the junction point between the resistor 12R and the capacitor 12C is connected to the negative input terminal of the comparator 9. The charge time constant determined by the capacitor 12C and the resistor 12R which forms portions of the bottom value hold circuit 12 is selected to have a value which is greater than the discharge time constant of the peak value hold circuit 8, and preferably should be ten or more times greater than the discharge time constant of the peak value hold circuit 8.

In the circuit of Figure 3, the output signal PH of the peak value hold circuit 8 is supplied through the buffer amplifier 11 to the bottom value hold circuit 12, and normally a discharge current will flow through the diode 12D from the voltage charged on the capacitor 12C, so that the charge voltage on the capacitor 12C will equal the output voltage PH of the peak value hold circuit 8.

However, when the peak value hold voltage rises, which will normally be because of drop-out or track jumping, the diode 12D will be cut-off so as to permit the reference voltage $+V_{cc}$ to cause current to be supplied through the resistor 12R to the capacitor 12C. At this time, since the charge time constant is extremely large as stated above, the voltage across the capacitor 12C will not rise as high as the peak hold voltage of the output signal PH. In other words, this voltage will not vary substantially even if the drop-out period is several frames in length.

The output voltage from the bottom value hold circuit 12 is supplied to the comparator 9 where it is compared with the voltage reference voltage $E_S$ so that the rotational speed of the spindle motor 12 is controlled by the difference in level between this output voltage and the reference voltage $E_S$. Thus, the spindle motor 12 will not be substantially influenced by drop-out and will rotate stably.

With the embodiment, even if drop-out or the like occurs, if is possible to control the spindle motor 10 so that it will rotate stably thus overcoming the problems encountered with the circuit of Figure 1. The embodiment only requires the addition of the bottom value hold circuit 12, so it is simple and inexpensive.

In this description, the charge time constant of the bottom value hold circuit 12 has been determined so that it is larger than the discharge time constant of the peak value hold circuit 8. The value of the charge time constant could be determined by considering the probability of the occurrence of a drop-out.

## Claims

1. A servo circuit for use with an apparatus for reproducing a disc driven by a disc drive motor (10) and on which a pulse code modulated signal modulated by a run length limited code is recorded at a constant linear velocity, the servo circuit comprising:
a detecting circuit (6) for detecting the time during which a playback signal is inverted and producing an output corresponding to the detected time; and
a peak value hold circuit (8) for receiving and holding the peak value of the output from said detecting circuit (6) for supply to a comparator (9); characterised by:
a bottom value hold circuit (12) downstream of said peak value hold circuit (8) having a time constant longer than the time constant of said peak value hold circuit (8) and for producing an output which follows the output of said peak value hold circuit (8); and
said comparator (9) receiving an output of said bottom value hold circuit (12) and a reference voltage and producing a signal to control said disc drive motor (10) such that a maximum or minimum time during which said playback signal is inverted is maintained at a value corresponding to the reference value of the linear velocity, whereby the linear velocity of said disc upon playback becomes equal to said reference value.

2. A servo circuit according to claim 1 further comprising:
an optical detector (1) for scanning said disc and producing an output signal; and
a differentiating circuit (5) for receiving an output of said optical detector (1); and wherein:
said detecting circuit (6) is a sawtooth signal producing circuit (6) for receiving the output of said differentiating circuit (5) and the level of said sawtooth signal varies as a function of the output of said differentiating circuit (5);
said bottom value hold circuit (12) comprises a first diode (12D) for receiving the output of said peak value hold circuit (8), a fixed-voltage source ($+V_{cc}$), and a first resistor (12R) and a first capacitor (12C) connected between ground and said fixed-voltage source ($+V_{cc}$);
said comparator (9) is connected to said first diode (12D) and to the junction point between said first resistor (12R) and said first capacitor (12C), and also has a reference voltage source ($E_S$) connected thereto; and
said disc drive motor (10) receives the output of said comparator (9).

3. A servo circuit according to claim 2 wherein said peak value hold circuit (8) includes a second diode (8D), and a second resistor (8R) and a second capacitor (8C) connected in parallel and having said time constant of said peak value hold circuit (8).

4. A servo circuit according to claim 3 wherein said time constant of said first resistor (12R) and said first capacitor (12C) is ten or more times said time constant of said second resistor (8R) and said second capacitor (8C).

5. A servo circuit according to claim 4 including a buffer amplifier (11) connected between said first and second diodes (12D, 8D).

## Patentansprüche

1. Servoschaltung für die Verwendung bei einem Gerät zur Wiedergabe einer Platte, die von einem Plattenantriebsmotor (10) angetrieben wird und auf der ein durch einen begrenzten Run-Längen-Code moduliertes polscodemoduliertes Signal mit einer konstanten linearen Geschwindigkeit aufgezeichnet ist,
mit einer Detektorschaltung (6) zur Ermittelung der Zeit, während der ein Wiedergabesignal invertiert wird, und zur Erzeugang eines der ermittelten Zeit entsprechenden Ausgangssignals,
und mit einer Spitzenwert-Halteschaltung (8) zur Aufnahme und zum Festhalten des Spitzenwertes des Ausgangssignals der Detektorschaltung (6) zwecks Abgabe an einen Komparator (9), dadurch gekennzeichnet,
daß auf der Ausgangsseite der Spitzenwert-Halteschaltung (8) eine Grundwert-Halteschaltung (12) vorgesehen ist, die eine Zeitkonstante aufweist, welche länger ist als die Zeitkonstante der genannten Spitzenwert-Halteschaltung (8), und die zur Erzeugung eines Ausgangssignals dient, welches dem Ausgangssignal der genannten Spitzenwert-Halteschaltung (8) folgt,
und daß der genannte Komparator (9) ein Ausgangssignal der genannten Grundwert-Halteschaltung (12) und eine Bezugsspannung aufnimmt und ein Ausgangssignal zu einer solchen Steuerung des Plattenantriebsmotors (10) erzeugt, daß eine Maximal- oder Minimalzeit, während der das genannten Wiedergabesignal invertiert wird, aud einem dem Bezugswert der linearen Geschwindigkeit entsprechenden Wert gehalten wird, wobei die betreffende lineare Geschwindigkeit der Platte auf die Wiedergabe hin gleich dem genannten Bezugswert wird.

2. Servoschaltung nach Anspruch 1, umfassend ferner einen optischen Detektor (1) zur Abtastung der genannten Platte und zur Erzeugung eines Ausgangssignals und eine Differenzierschaltung (5) für die Aufnahme eines Ausgangssignals des betreffenden optischen Detektors (1),

wobei die genannte Detektorschaltung (6) eine ein Sägezahnsignal erzeugende Schaltung (6) aufweist, die das Ausgangssignal der genannten Differenzierschaltung (5) aufnimmt und deren Sägezahnsignal im Pegel als Funktion des Ausgangssignals der betreffenden Differenzierschaltung (5) sich ändert,

wobei die Grundwert-Halteschaltung (12) eine erste Diode (12D) für die Aufnahme des Ausgangssignals der genannten Spitzenwert-Halteschaltung (8), eine eine feste Spannung abgebende Spannungsquelle ($+V_{cc}$) sowie einen ersten Widerstand (12R) und einen ersten Kondensator (12C) zwischen Masse bzw. Erde und der betreffenden eine feste Spannung abgebenden Spannungsquelle ($+V_{cc}$) aufweist,

wobei der genannte Komparator (9) an der ersten Diode (12D) und dem Verbindungspunkt zwischen dem genannten ersten Widerstand (12R) und dem genannten ersten Kondensator (12C) angeschlossen ist und außerdem mit einer Bezugsspannungsquelle ($E_S$) verbunden ist

und wobei der Plattenantriebsmotor (10) das Ausgangssignal des genannten Komparators (9) aufnimmt.

3. Servoschaltung nach Anspruch 2, wobei die Spitzenwert-Halteschaltung (8) eine zweite Diode (8D) sowie einen zweiten Widerstand (8R) und einen dazu parallel liegenden zweiten Kondensator (8C) aufweist, durch den mit dem zweiten Widerstand die Zeitkonstante der Spitzenwert-Halteschaltung (8) gegeben ist.

4. Servoschaltung nach Anspruch 3, wobei die Zeitkonstante des den ersten Widerstand (12R) und den ersten Kondensator (12C) umfassenden Gliedes das Zehnfache oder ein noch größeres Mehrfaches der Zeitkonstante des den zweiten Widerstand (8R) und den zweiten Kondensator (8C) umfassenden Gliedes ist.

5. Servoschaltung nach Anspruch 4, umfassend einen Pufferverstärker (11), der zwischen der ersten Diode (12D) und der zweiten Diode (8D) angeschlossen ist.

**Revendications**

1. Circuit d'asservissement destiné à être utilisé avec un appareil pour reproduire un disque entraîné par un moteur d'entraînement de disque (10) et sur lequel un signal modulé par impulsions codées, selon un procédé de modulation utilisant un code à longueur d'exécution limitée, est enregistré à une vitesse linéaire constante, le circuit d'asservissement comprenant:

un circuit de détection (6) pour détecter le temps pendant lequel un signal de lecture est inversé et pour produire un signal de sortie correspondant au temps détecté; et

un circuit de maintien de valeur de pointe (8) destiné à recevoir et à maintenir la valeur maximale du signal de sortie dudit circuit de détection (6), en vue de son application à un comparateur (9); caractérisé:

en ce qu'il comprend un circuit de maintien de valeur inférieure (12) prévu en aval du circuit de maintien de valeur de pointe (8) et ayant une constante de temps plus longue que la constante de temps du circuit de maintien de valeur de pointe (8), qui est destiné à produire un signal de sortie qui suit le signal de sortie du circuit de maintien de valeur de pointe (8); et

que ledit comparateur (9) reçoit un signal de sortie de circuit de maintien de valeur inférieur (12) et une tension de référence et produit un signal pour commander le moteur d'entraînement de disque (10) de manière qu'un temps maximal ou minimal pendant lequel le signal de lecture est inversé soit maintenu à une valeur correspondant à la valeur de référence de la vitesse linéaire, de sorte que la vitesse linéaire du disque lors de sa lecture devient égale à la valeur de référence.

2. Circuit d'asservissement selon la revendication 1, comprenant en outre:

un détecteur optique (1) pour explorer le disque et produire un signal de sortie; et

un circuit différenciateur (5) destiné à recevoir le signal de sortie du détecteur optique (1); et dans lequel:

le circuit de détection (6) est un circuit (6) produisant un signal en dents de scie, qui est destiné à recevoir le signal de sortie du circuit différenciateur (5), le niveau du signal en dents de scie variant en fonction du signal de sortie du circuit différenciateur (5);

la circuit de maintien de valeur inférieure (12) comprend une première diode (12D) destinée à recevoir le signal de sortie du circuit de maintien de valeur de pointe (8), une source de tension fixe ($+V_{cc}$), de même qu'une première résistance (12R) et un premier condensateur (12C) connectés entre la masse et cette source de tension fixe ($+V_{cc}$);

le comparateur (9) est connecté à ladite première diode (12D) et au point de jonction entre la première résistance (12R) et le premier condensateur (12C), une source de tension de référence ($E_S$) étant connectée en plus au comparateur; et

le moteur d'entraînement de disque (10) reçoit le signal de sortie de ce comparateur (9).

3. Circuit d'asservissement selon la revendication 2, dans lequel le circuit de maintien de valeur de pointe (8) comporte une deuxième diode (8D), de même qu'une deuxième résistance (8R) et un deuxième condensateur (8C) qui sont branchés en parallèle et qui présentent ladite constante de temps du circuit de maintien de valeur de point (8).

4. Circuit d'asservissement selon la revendication 3, dans lequel la constante de temps de la première résistance (12R) et du premier condensateur (12C) est dix fois plus longue, ou davantage, que la constante de temps de la deuxième résistance (8R) et du deuxième condensateur (8C).

5. Circuit d'asservissement selon la revendication 4, comprenant un amplificateur-séparateur (11) branché entre la première (12D) et la seconde diode (8D).

0 066 445

F I G. 1

Frame Sync Signal

5.5T — 5.5T

F I G. 2A (S₀)

F I G. 2B (PI)

Drop-Out

F I G. 2C (SA)

F I G. 2D (PH)

Peak Level at 5.5T

Level caused by Drop-Out

F I G. 3